# EUROPEAN PATENT APPLICATION

(11) **EP 3 404 459 A1**
(43) Date of publication of application: **21.11.2018**
(21) Application number: 16888659.6
(22) Date of filing: 02.02.2016
(51) Int. Cl.: G02B 6/42, H04B 10/25

(54) **SINGLE OPTICAL FIBER BI-DIRECTIONAL SUB-ASSEMBLY**

(71) Applicant: Huawei Technologies Co., Ltd., Longgang District Shenzhen, Guangdong 518129 (CN)
(72) Inventor: LI, Yuanmou, Shenzhen Guangdong 518129 (CN); DONG, Yinghua, Shenzhen Guangdong 518129 (CN); LIU, Xishe, Shenzhen Guangdong 518129 (CN)
(74) Representative: Thun, Clemens
(86) International application number: PCT/CN2016/073200
(87) International publication number: WO 2017/132834

(57) **Abstract**

A single-fiber bidirectional sub assembly, includes: a base (10), a laser (21), an optical receiver (23), a wavelength splitter (25), and a sealing cover (30) with a lens (31). The base (10) includes a surface (11), an accommodation groove (13) is disposed on the surface (11), the accommodation groove (13) includes a groove bottom wall (131) parallel to the surface (11), a wavelength division surface (251) is disposed in the wavelength splitter (25), the optical receiver (23) is disposed on the groove bottom wall (131), the wavelength splitter (25) is disposed in the accommodation groove (13), and shields the optical receiver (23), the laser (21) is located on one side of the accommodation groove (13), and the wavelength division surface (251) faces the laser (21), and an included angle is formed between the wavelength division surface (251) and the groove bottom wall (131) on which the optical receiver (23) is located; and the sealing cover (30) covers the base (10), and accommodates the laser (21), the optical receiver (23), and the wavelength splitter (25), a beam of the laser (21) is reflected to the lens (31) by the wavelength division surface (251), and the optical receiver (23) receives and transmits an optical signal that is transmitted through the lens (31) and the wavelength splitter (25).

## Description

### TECHNICAL FIELD

The present invention relates to the field of optical communications technologies, and in particular, to a single-fiber bidirectional sub assembly.

### BACKGROUND

In an optical communications system, an optical module is mainly configured to implement optical-to-electrical conversion or electrical-to-optical conversion, that is, convert a to-be-sent data signal into an optical signal, and send the optical signal to a peer end by using an optical fiber; or receive, by using an optical fiber, an optical signal sent by a peer end, convert the optical signal into an electrical signal, and then restore received data from the electrical signal. In a single-fiber bidirectional system (a single fiber simultaneously transmits bidirectional data signals), an optical module mainly includes a BOSA (Bidirectional Optical Sub assembly, bidirectional optical sub assembly), an LA (Limiting Amplifier, limiting amplifier), and an LDD (Laser Diode Driver, laser diode driver). Currently, a BOSA commonly used in the industry includes a transmitter and a receiver, and the transmitter, the receiver, and an optical fiber connector are fastened by using a matching metal piece externally, so that laser light transmitted by the transmitter can be coupled to the optical fiber, and light from the optical fiber can be transmitted to the receiver, and be received by a PD (Photodetector, photodetector).

Currently, a design direction of a commonly-used single-fiber bidirectional sub assembly is based on a conventional metal piece processing and molding solution, that is, elements such as a laser and a preamplifier are disposed on a metal base of a unidirectional transceiver, and a 45-degree light filter and an optical fiber ferrule are configured on an optical axis. The laser, the optical transceiver, and the preamplifier in the single-fiber bidirectional sub assembly of such structure are on a same plane, and transmission over an optical path is completed in a cavity of an isolation cover. In a transmission process, light emitted by the laser is reflected by different dielectric surfaces of the cavity. Because the optical transceiver is unprotected, optical and electrical crosstalk is very likely to occur.

### SUMMARY

Embodiments of the present invention provide a single-fiber bidirectional sub assembly, to resolve a technical problem that optical and electrical crosstalk is generated when an existing single-fiber bidirectional subassembly transmits or receives an optical signal.

The present invention provides a single-fiber bidirectional sub assembly, and the single-fiber bidirectional sub assembly includes: a base, a laser, an optical receiver, a wavelength splitter, and a sealing cover with a lens. The base includes a surface, an accommodation groove is disposed on the surface, the accommodation groove includes a groove bottom wall parallel to the surface, a wavelength division surface is disposed on the wavelength splitter, the optical receiver is disposed on the groove bottom wall, the wavelength splitter is disposed in the accommodation groove, and shields the optical receiver, the laser is located on one side of the accommodation groove, and the wavelength division surface faces the laser, and an included angle is formed between the wavelength division surface and the groove bottom wall on which the optical receiver is located; and the sealing cover covers the base, and accommodates the laser, the optical receiver, and the wavelength splitter, a beam of the laser is reflected to the lens by the wavelength division surface, and the optical receiver receives and transmits an optical signal that is transmitted through the lens and the wavelength splitter.

The wavelength splitter includes a plane parallel to the wavelength division surface, a support stand is disposed on each of two opposite groove side walls of the accommodation groove, the support stand has a support slope that is inclined relative to the groove bottom wall, and the plane abuts against the support slope, so that the included angle is formed between the wavelength division surface forms and the groove bottom wall.

The base includes a support body, the support body includes two separate support arms and a connecting bar that connects the two support arms, the support slope is disposed on the support arm, the plane is attached to the support slope, the support body is disposed in the accommodation groove, so that the included angle is formed between the wavelength division surface and the groove bottom wall, and the optical receiver is located between the two support arms.

The wavelength splitter includes a plane and a slope that is connected to the plane at an included angle, the slope is the wavelength division surface, a support stand is disposed on each of two opposite groove side walls of the accommodation groove, the support stand has a support plane parallel to the groove bottom wall, the support plane supports the wavelength splitter, and the plane abuts against the support plane, and faces the optical receiver.

The wavelength splitter includes a first plane, a second plane that is perpendicularly connected to the first plane, and a slope that connects the first plane and the second plane, the slope is the wavelength division surface, a support stand is disposed on each of two opposite groove side walls of the accommodation groove, the support stand has a support slope that is inclined relative to the groove bottom wall, the wavelength splitter is accommodated in the accommodation groove, the support slope abuts against the wavelength division surface, the first plane is parallel to the groove bottom wall, and the second plane and the laser are oppositely disposed, so that the beam is incident from the second plane to the wavelength division surface.

The wavelength splitter is a rectangular block, the wavelength splitter includes a plane and a diagonal slope that is inside the wavelength splitter, the diagonal slope is connected to a side of the plane, the diagonal slope is the wavelength division surface, a support stand is disposed on each of two opposite groove side walls of the accommodation groove, the support stand has a support plane parallel to the groove bottom wall, the support plane supports the wavelength splitter, so that the included angle is formed between the wavelength division surface and the groove bottom wall, and the plane is perpendicular to the groove bottom wall, and is opposite to the laser.

A first groove is disposed on the surface of the base, the first groove is located on one side of the accommodation groove, and communicates with the accommodation groove, and the laser is disposed in the first groove.

The single-fiber bidirectional sub assembly includes a preamplifier, a second groove is disposed on the surface of the base, the second groove is opposite to the first groove, and is disposed on another side of the accommodation groove, and the preamplifier is disposed in the second groove, and is electrically connected to the optical receiver.

The single-fiber bidirectional sub assembly includes a backlight detector, the backlight detector is disposed in the first groove, and the backlight detector is located on one side, of the laser, that is far away from the wavelength splitter.

The sealing cover includes a top wall and a peripheral wall that is disposed around the top wall, and the lens is spherical, and is disposed at a central position of the top wall.

The single-fiber bidirectional sub assembly further includes a housing, the housing covers the sealing cover, and the housing and the sealing cover are coaxial, a through hole is disposed at one end of the housing that faces the lens, a port used for inserting an optical fiber is disposed at the other end, and an optical path of the port, a center line of the through hole, and a center line of the lens coincide.

The wavelength division surface is a reflective surface that is formed by an optical film attached to the wavelength splitter. The included angle between the wavelength division surface and the groove bottom wall is 45 degrees.

Several pins are further disposed on one side of the base that is opposite to the surface.

In the single-fiber bidirectional sub assembly in the present invention, the optical receiver is disposed in the accommodation groove, and the included angle is formed between the wavelength division surface of the wavelength splitter and the groove bottom wall, so that the optical receiver and the laser are not located on a same plane, a high-frequency interference signal is difficult to enter the accommodation groove, and the interference signal is prevented from entering the optical receiver, thereby avoiding optical and electrical crosstalk in the single-fiber bidirectional sub assembly.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and persons of ordinary skill in the art may still derive other drawings from these accompanying drawings without creative efforts.
FIG. 1 is a schematic planar diagram of an internal structure of a single-fiber bidirectional sub assembly according to a first embodiment of the present invention;
FIG. 2 is a schematic diagram of a partial structure of a single-fiber bidirectional sub assembly shown in FIG. 1;
FIG. 3 is a cross-sectional schematic diagram of a single-fiber bidirectional sub assembly shown in FIG. 1;
FIG. 4 is a cross-sectional schematic diagram of a single-fiber bidirectional sub assembly according to a second embodiment of the present invention;
FIG. 5 is a schematic structural diagram of a wavelength splitter of a single-fiber bidirectional sub assembly shown in FIG. 4;
FIG. 6 is a cross-sectional schematic diagram of a single-fiber bidirectional sub assembly according to a third embodiment of the present invention;
FIG. 7 is a cross-sectional schematic diagram of a single-fiber bidirectional sub assembly according to a fourth embodiment of the present invention; and
FIG. 8 is a cross-sectional schematic diagram of a single-fiber bidirectional sub assembly according to a fifth embodiment of the present invention.

### DESCRIPTION OF EMBODIMENTS

The following clearly and completely describes the technical solutions in the implementations of the present invention with reference to the accompanying drawings in the implementations of the present invention.

The present invention provides a single-fiber bidirectional sub assembly, and the single-fiber bidirectional sub assembly is configured to transmit and receive an optical signal.

The single-fiber bidirectional sub assembly includes: a base, a laser, an optical receiver, a wavelength splitter, and a sealing cover with a lens. The base includes a surface, an accommodation groove is disposed on the surface, the accommodation groove includes a groove bottom wall parallel to the surface, a wavelength division surface is disposed on the wavelength splitter, the optical receiver is disposed on the groove bottom wall, the wavelength splitter is disposed in the accommodation groove, and shields the optical receiver, the laser is located on one side of the accommodation groove, and faces the wavelength division surface, an included angle is formed between the wavelength division surface and the groove bottom wall on which the optical receiver is located; and the sealing cover covers the base, and accommodates the laser, the optical receiver, and the wavelength splitter, a beam of the laser is reflected to the lens by the wavelength division surface, and the optical receiver receives and transmits an optical signal that is transmitted through the lens and the wavelength splitter.

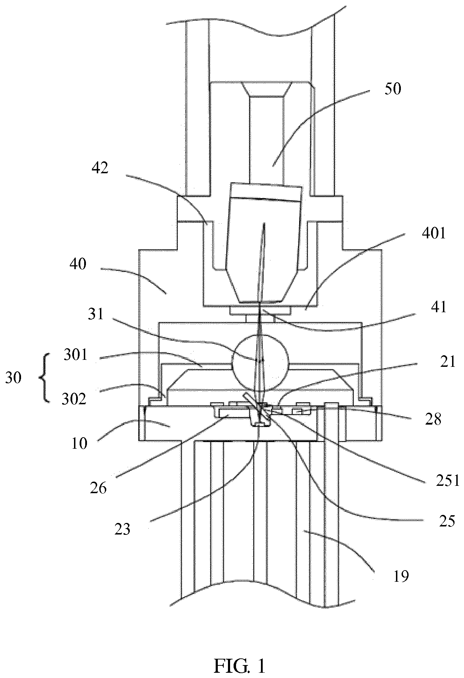

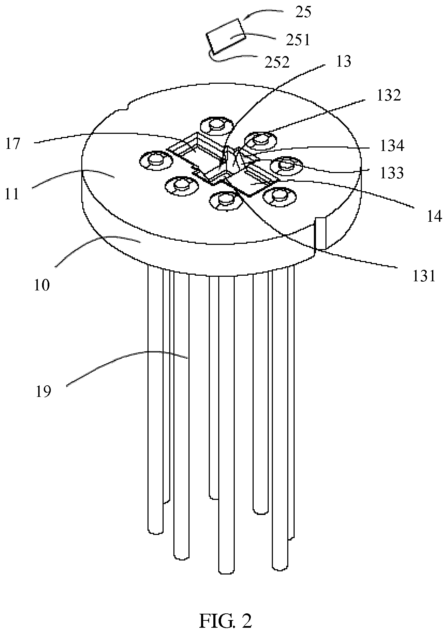

Referring to FIG. 1 to FIG. 3, in a first embodiment of the present invention, the single-fiber bidirectional sub assembly includes a base 10, a laser 21, an optical receiver 23, a wavelength splitter 25, and a sealing cover 30 with a lens 31. The base 10 includes a surface 11. A rectangular accommodation groove 13 is disposed on the surface 11. The accommodation groove 13 includes a groove bottom wall 131 parallel to the surface 11 and two opposite groove side walls 132. The sealing cover 30 includes a top wall 301 and a peripheral wall 302 that is disposed around the top wall, and the lens 31 is spherical, and is disposed at a central position of the top wall 301. The peripheral wall 302 of the sealing cover 30 abuts against a peripheral edge of the surface 11, and accommodates the laser 21, the optical receiver 23, and the wavelength splitter 25 together with the top wall 301. The lens 31 is spherical, and is disposed at the central position of the top wall. A center line of the lens 31 is parallel to a straight line indicating an optical path that passes through a wavelength division surface 251 to the optical receiver 23 is located.

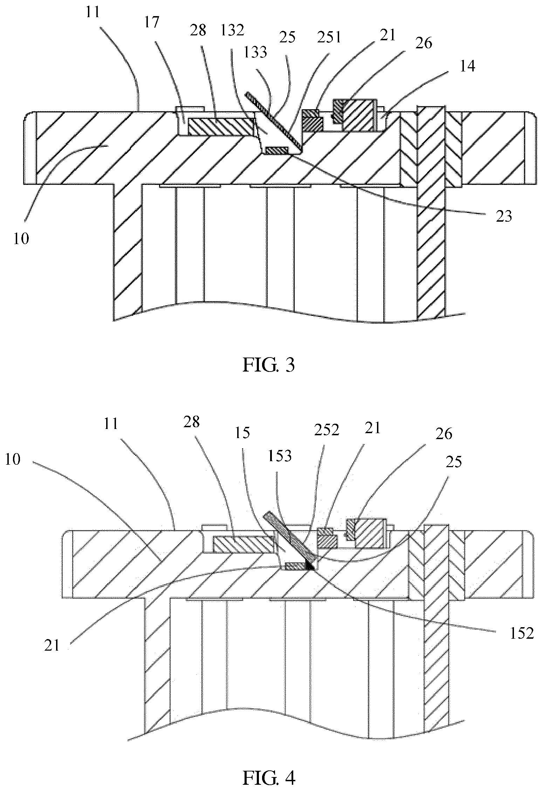

In this embodiment, as shown in FIG. 3, the wavelength splitter 25 is sheet-like, and the wavelength splitter 25 includes the wavelength division surface 251 and a plane 252 that is parallel to the wavelength division surface 251. A support stand 134 that faces an opening of the accommodation groove is disposed on each groove side wall 132, and the support stand 134 has a support slope 133 that is inclined relative to the groove bottom wall 131. The support slope 133 faces the opening of the accommodation groove 13. It can be understood that the support stand is a support body that is integrated into the base 10 and disposed in the accommodation groove 13. The optical receiver 23 is disposed on the groove bottom wall 131, and is located between the support stands on the two groove side walls. The wavelength splitter 25 is disposed in the accommodation groove 13 and supported by the support stand 134, and shields the optical receiver 23. The plane abuts against the support slope 133, so that an included angle is formed between the wavelength division surface 251 and the groove bottom wall 131. In this embodiment, the included angle is 45 degrees, that is, the included angle between the support slope 133 and the groove bottom wall is 45 degrees.

Further, a first groove 14 is disposed on the surface 11 of the base 10, the first groove 14 is located on one side of the accommodation groove 13, and communicates with the accommodation groove 13. The laser 21 is an optical fiber laser, and the laser 21 is disposed in the first groove 14, and faces the wavelength division surface 251. According to a designed groove depth of the accommodation groove 13 in the present invention, the laser 21 is disposed in the first groove 14, to adjust a height of the laser 21 relative to the wavelength splitter 25, so as to ensure that all beams of the laser 21 can be incident to the wavelength division surface 251, and be reflected to the lens 31 by the wavelength division surface 251. In this embodiment, a groove bottom wall of the first groove 14 is higher than the groove bottom wall of the accommodation groove 13. To facilitate height adjustment of the laser 21 to adapt to the wavelength division surface 251, a support body is disposed on the bottom wall of the first groove 14, to support the laser 21.

The laser 21 is disposed in the first groove 14, and faces the wavelength division surface 251. The beam of the laser 21 is incident to the wavelength division surface 251, and is reflected to the lens 31 by the wavelength division surface. Then, after being converged by the lens 31, the beam enters an optical fiber that is connected to the sealing cover, and is transmitted to outside, such as a serving end, by using the optical fiber. After receiving a signal, the serving end returns a feedback signal by using a same optical path. The feedback signal is converged by the lens 31, and then passes through the wavelength division surface 251 and the entire wavelength splitter 25. The optical receiver 23 receives the feedback signal, and transmits the feedback signal to a client. In the present invention, the accommodation groove 13 is disposed on the base 10 of the single-fiber bidirectional sub assembly, to accommodate the optical receiver 23, the included angle is formed between the wavelength division surface 251 of the wavelength splitter 25 and the groove bottom wall that carries the optical receiver 23, and the wavelength splitter 25 shields the optical receiver 23, so that the optical receiver 23 and the laser 21 are not located on a same plane. Even if interference light whose path change for a plurality of times and that is incident to the optical receiver 23 exists in the sealing cover, because the optical receiver 23 is in the accommodation groove 13 and the wavelength splitter 25 shields the optical receiver 23, the high-frequency interference signal is difficult to enter the accommodation groove 13. This prevents a beam from entering the optical receiver 23, and further avoids optical and electrical crosstalk in the single-fiber bidirectional sub assembly.

Further, the single-fiber bidirectional sub assembly includes a preamplifier 26, a second groove 17 is disposed on the surface 11 of the base 10, and the second groove 17 is opposite to the first groove 14, and is disposed on another side of the accommodation groove 13. The preamplifier 26 is disposed in the second groove 17, and is electrically connected to the optical receiver 23. Specifically, the second groove 17 communicates with the accommodation groove 13. The preamplifier 26 is disposed on a groove bottom wall of the second groove, and is connected to the optical receiver 23 by using a conducting wire. After receiving a signal that is fed back from outside by using the optical fiber, the optical receiver 23 transmits the signal to the preamplifier 26, and the preamplifier 26 converts the signal into a voltage signal for output. After receiving the optical signal, the optical receiver 23 first transmits the optical signal to the preamplifier 26; then the preamplifier 26 converts the optical signal into the voltage signal; and outputs, by using a pin connected to the preamplifier 26, the voltage signal to a circuit board that carriers the single-fiber bidirectional sub assembly or the like.

Further, the single-fiber bidirectional sub assembly includes a backlight detector 28, the backlight detector 28 is disposed in the first groove 14, and the backlight detector 28 is located on one side, of the laser 21, that is far away from the wavelength splitter 25. In this embodiment, the backlight detector 28 is disposed in the first groove 14 by using a bracket 181, and faces the laser 21, and the backlight detector 28 is configured to monitor a light emission rate of the laser 21.

Further, several pins 19 are further disposed on one side of the base 10 that is opposite to the surface 11. The base 10 is generally a frustum of a cone, and the base 10 includes a back facet 111 opposite to the surface 11. The surface 11 and the back facet 111 are circular planes. The several pins 19 are disposed on the back facet 111 with one end inserted into the base 10. The laser 21, the optical receiver 23, the preamplifier 26, and the backlight detector 28 each are correspondingly connected to one pin 19, and some pins 19 are connected to a client connector, to implement transmission of a signal that is converged by the lens, returned through the optical fiber, and received by the optical receiver 23.

Further, the wavelength division surface 251 is a reflective surface formed by an optical film on the wavelength splitter 25. After reaching the wavelength division surface 251, the beam of the laser 21 is reflected to the lens 31, and the beam is prevented from directly passing through the wavelength splitter and entering the optical receiver 23.

Further, the single-fiber bidirectional sub assembly further includes a housing 40, the housing 40 covers the sealing cover 30, and the housing 40 and the sealing cover 30 are coaxial. A through hole 41 is disposed at one end, of the housing 40, that faces the lens 31. A port 42 used for inserting an optical fiber 50 is disposed at the other end. A beam transmitted through the port 42, a center line of the through hole 41, and a center line of the lens 31 coincide. Specifically, the optical fiber 50 is mainly an adapter that includes an optical fiber ferrule and a sleeve. The housing 40 is cylindrical, and a baffle plate 401 is disposed inside the housing 40. The through hole 41 is disposed in the middle of the baffle plate 401. The port 42 is disposed at the other end of the housing 40. The optical fiber 50 is fastened by welding the sleeve and the housing, so that the optical fiber ferrule is inserted into the port 402. The sealing cover 30 is sheathed with an end of the housing 40 at which the baffle plate 401 is disposed, so that the sealing cover 30 is sealed.

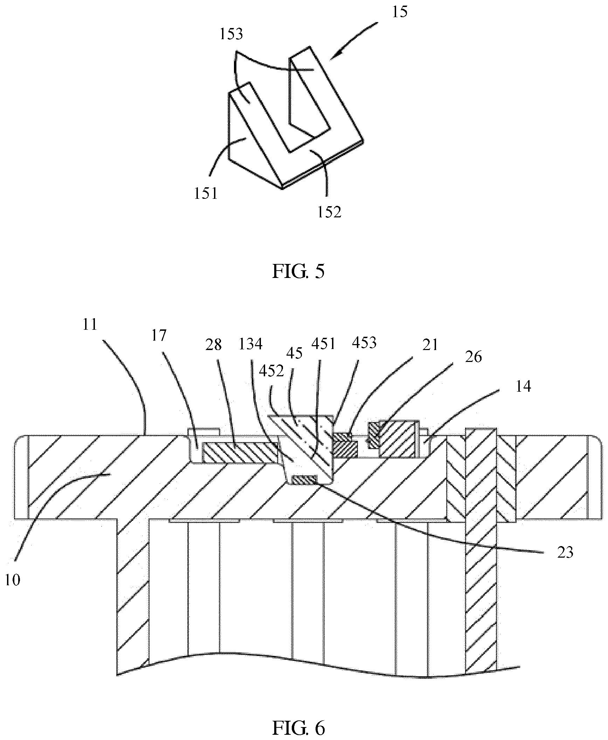

Referring to FIG. 4 and FIG. 5, in a second embodiment of the present invention, a difference between the first embodiment and the second embodiment lies in that the wavelength splitter 25 is supported by a support body 15 of the base 10. The support body 15 and the base 10 are independently disposed. The support body 15 includes two separate support arms 151 and a connecting bar 152 that connects the two support arms 151, a support slope 153 is disposed on the support arm 151, a plane of the wavelength splitter 25 is attached to the support slope 153, the support body 15 is disposed in the accommodation groove 13, so that the included angle is formed between the wavelength division surface 251 and the groove bottom wall 131, and the optical receiver is located between the two support arms.

In this embodiment, the support body 15 is a right-angle triangular support structure, the support arm 151 is a right triangle block, and the support slope 153 is a slope of the triangle block. The connecting bar 152 connects the two support arms 151 at positions of angles other than right angles, so that the support body 15 can be placed horizontally on the groove bottom wall 131, and an included angle between the support slope 153 and the groove bottom wall is 45 degrees, that is, a side on which the connecting bar 152 is disposed abuts against the groove bottom wall 131. First, the wavelength splitter 25 is first disposed on the support slope 153, then the support body 15 is disposed in and fastened to the accommodation groove 13, with the wavelength division surface 251 facing the laser 21.

In this embodiment, the support body 15 and the base 10 are separately disposed, so that the wavelength splitter 25 is disposed on the support body 15, that is, first, the wavelength splitter 25 may be first disposed on the support body 15, and then the support body 15 is disposed on the base 10, so as to ensure assembly precision of the wavelength splitter 25 and the support body 15, and further ensure position precision of the wavelength splitter 25 relative to an element such as the laser.

Referring to FIG. 6, in a third embodiment of the present invention, a difference between the first embodiment and the third embodiment lies in that a wavelength splitter 45 includes a first plane 452, a second plane 453 that is perpendicularly connected to the first plane 452, and a slope that connects the first plane 452 and the second plane 453, and the slope is a wavelength division surface 451. The wavelength splitter 45 is accommodated in the accommodation groove 13, the support slope 133 abuts against the wavelength division surface 451, so that an included angle is formed between the wavelength division surface 451 and the groove bottom wall 131. The first plane 452 is parallel to the groove bottom wall 131, and the second plane 453 is opposite to the laser 21, so that a beam is incident from the second plane to the wavelength division surface 451. In this embodiment, the first plane 452 faces an opening of the accommodation groove 13, and is parallel to a plane on which the optical receiver 23 is located.

Specifically, the wavelength splitter 45 is a transparent right-angle triangular pyramid, the first plane 452 and the second plane 453 are surfaces on two right-angle sides of the right-angle triangular pyramid, and the wavelength division surface 451 is a slope of the right-angle triangular pyramid. The second plane 453 and the wavelength division surface 451 are partially located in the accommodation groove 13, and the second plane 453 is close to the laser 21. The wavelength splitter 45 in this embodiment is the right-angle triangular pyramid, so that assembly precision can be ensured during assembly, and smooth signal transmission in the single-fiber bidirectional sub assembly is further ensured.

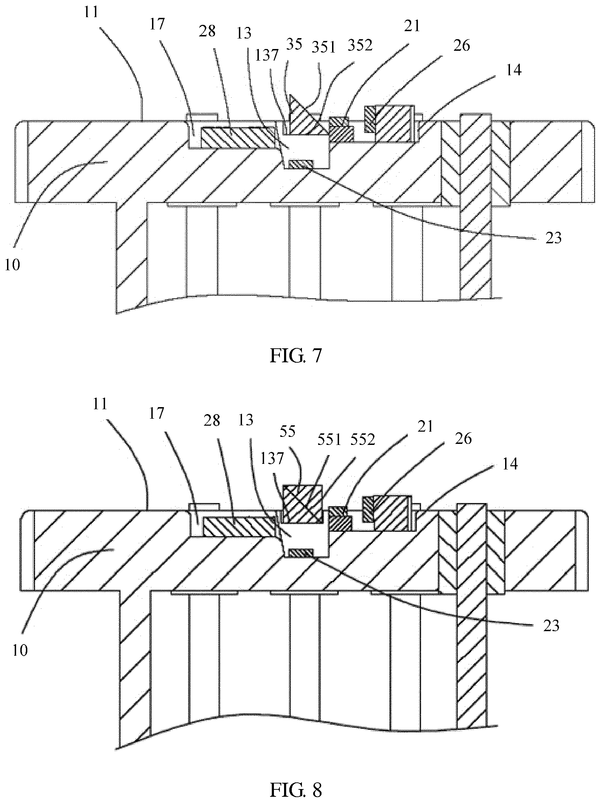

Referring to FIG. 7, in a fourth embodiment of the present invention, a difference between the first embodiment and the fourth embodiment lies in that a wavelength splitter 35 includes a plane 352 and a slope that is connected to the plane 352 at an included angle, and the slope is a wavelength division surface 351. A support stand (not shown in the figure) is disposed on each of two opposite groove side walls 132 of the accommodation groove 13, the support stand has a support plane 137 parallel to the groove bottom wall 131, the support plane 137 abuts against and supports the wavelength splitter 35 in the accommodation groove 131, and the plane 352 abuts against the support plane 137, and faces the optical receiver 23. Specifically, the plane 352 is parallel to the groove bottom wall 131, and the wavelength division surface faces the laser 21.

It can be understood that in another implementation, the support plane may be disposed outside an opening of the accommodation groove and is parallel to the surface. The wavelength splitter 35 is supported outside right above the accommodation groove 13. The plane 352 of the wavelength splitter 35 is located at an opening position of the accommodation groove 13, and is parallel to the surface 11. The wavelength division surface 351 is located above the external surface 11 of the accommodation groove 13, and faces the laser 21. In this structure, the laser does not need to be disposed in the first groove. The wavelength splitter 35 of right-angle triangular pyramid is selected and externally disposed above the accommodation groove by using the support body, to cover the optical receiver 23, so that the wavelength division surface 351 and the accommodation groove 13 protect the optical receiver 23. In addition, the laser 21 may be directly disposed on the surface 11, and a groove accommodating the laser 21 does not need to be additionally disposed with respect to positions of the laser 21 and the backlight detector 28 and the accommodation groove, so as to reduce processing technologies used.

Referring to FIG. 8, in a fifth embodiment of the present invention, a difference between the fourth embodiment and the fifth embodiment lies in that a wavelength splitter 55 is a rectangular block, the wavelength splitter 55 includes a plane 552 and a diagonal slope that is inside the wavelength splitter 55, the diagonal slope is connected to a side of the plane 552, and the diagonal slope is a wavelength division surface 551. The support plane 137 supports the wavelength splitter 55, so that an included angle is formed between the wavelength division surface 551 and the groove bottom wall 131, and the plane 552 is perpendicular to the groove bottom wall 131, and is opposite to the laser 21.

Specifically, the wavelength splitter 55 is a rectangular block of glass, the plane 552 is a surface on the wavelength splitter 55 of the rectangular block, and the wavelength division surface 551 is a diagonal plane of the rectangular block, and specifically, is formed by attaching an optical film on the diagonal plane of the rectangular block. The plane 552 and the wavelength division surface 551 are partially accommodated in the accommodation groove 13. It can be understood that in another implementation, the plane 552 of the wavelength splitter 55 is located at an opening position of the accommodation groove 13, and is parallel to the surface 11, and the wavelength division surface 551 is located above the external surface 11 of the accommodation groove 13, and faces the laser 21.

The foregoing descriptions are examples of implementations of the present invention. It should be noted that persons of ordinary skill in the art may make certain improvements and polishing without departing from the principle of the present invention and the improvements and polishing shall fall within the protection scope of the present invention.

## Claims

1. A single-fiber bidirectional sub assembly, comprising: a base, a laser, an optical receiver, a wavelength splitter, and a sealing cover with a lens, wherein the base comprises a surface, an accommodation groove is disposed on the surface, the accommodation groove comprises a groove bottom wall parallel to the surface, a wavelength division surface is disposed on the wavelength splitter, the optical receiver is disposed on the groove bottom wall, the wavelength splitter is disposed in the accommodation groove, and shields the optical receiver, the laser is located on one side of the accommodation groove, and the wavelength division surface faces the laser, and an included angle is formed between the wavelength division surface and the groove bottom wall on which the optical receiver is located; and
the sealing cover covers the base, and accommodates the laser, the optical receiver, and the wavelength splitter, a beam of the laser is reflected to the lens by the wavelength division surface, and the optical receiver receives and transmits an optical signal that is transmitted through the lens and the wavelength splitter.

2. The single-fiber bidirectional sub assembly according to claim 1, wherein the wavelength splitter comprises a plane parallel to the wavelength division surface, a support stand is disposed on each of two opposite groove side walls of the accommodation groove, the support stand has a support slope that is inclined relative to the groove bottom wall, and the plane abuts against the support slope, so that the included angle is formed between the wavelength division surface and the groove bottom wall.

3. The single-fiber bidirectional sub assembly according to claim 1, wherein the base comprises a support body, the support body comprises two separate support arms and a connecting bar that connects the two support arms, a support slope is disposed on the support arm, a plane is attached to the support slope, the support body is disposed in the accommodation groove, so that the included angle is formed between the wavelength division surface and the groove bottom wall, and the optical receiver is located between the two support arms.

4. The single-fiber bidirectional sub assembly according to claim 1, wherein the wavelength splitter comprises a plane and a slope that is connected to the plane at an included angle, the slope is the wavelength division surface, a support stand is disposed on each of two opposite groove side walls of the accommodation groove, the support stand has a support plane parallel to the groove bottom wall, the support plane supports the wavelength splitter, and the plane abuts against the support plane, and faces the optical receiver.

5. The single-fiber bidirectional sub assembly according to claim 1, wherein the wavelength splitter comprises a first plane, a second plane that is perpendicularly connected to the first plane, and a slope that connects the first plane and the second plane, the slope is the wavelength division surface, a support stand is disposed on each of two opposite groove side walls of the accommodation groove, the support stand has a support slope that is inclined relative to the groove bottom wall, the wavelength splitter is accommodated in the accommodation groove, the support slope abuts against the wavelength division surface, the first plane is parallel to the groove bottom wall, and the second plane and the laser are oppositely disposed, so that the beam is incident from the second plane to the wavelength division surface.

6. The single-fiber bidirectional sub assembly according to claim 1, wherein the wavelength splitter is a rectangular block, the wavelength splitter comprises a plane and a diagonal slope that is inside the wavelength splitter, the diagonal slope is connected to a side of the plane, the diagonal slope is the wavelength division surface, a support stand is disposed on each of two opposite groove side walls of the accommodation groove, the support stand has a support plane parallel to the groove bottom wall, the support plane supports the wavelength splitter, so that the included angle is formed between the wavelength division surface and the groove bottom wall, and the plane is perpendicular to the groove bottom wall, and is opposite to the laser.

7. The single-fiber bidirectional sub assembly according to any one of claims 2 to 6, wherein a first groove is disposed on the surface of the base, the first groove is located on one side of the accommodation groove, and communicates with the accommodation groove, and the laser is disposed in the first groove.

8. The single-fiber bidirectional sub assembly according to claim 7, wherein the single-fiber bidirectional sub assembly comprises a preamplifier, a second groove is disposed on the surface of the base, the second groove is opposite to the first groove, and is disposed on another side of the accommodation groove, and the preamplifier is disposed in the second groove, and is electrically connected to the optical receiver.

9. The single-fiber bidirectional sub assembly according to claim 7, wherein the single-fiber bidirectional sub assembly comprises a backlight detector, the backlight detector is disposed in the first groove, and the backlight detector is located on one side, of the laser, that is far away from the wavelength splitter.

10. The single-fiber bidirectional sub assembly according to any one of claims 1 to 9, wherein the sealing cover comprises a top wall and a peripheral wall that is disposed around the top wall, and the lens is spherical, and is disposed at a central position of the top wall.

11. The single-fiber bidirectional sub assembly according to claim 10, wherein the single-fiber bidirectional sub assembly further comprises a housing, the housing covers the sealing cover, and the housing and the sealing cover are coaxial, a through hole is disposed at one end of the housing that faces the lens, a port used for inserting an optical fiber is disposed at the other end, and an optical path of the port, a center line of the through hole, and a center line of the lens coincide.
